# DEMANDE DE BREVET EUROPEEN

(11) **EP 4 703 181 A1**
(43) Date de publication de la demande: **04.03.2026**
(21) Numéro de dépôt: 24306434.2
(22) Date de dépôt: 03.09.2024
(51) Int. Cl.: B60L 5/38, B60L 5/42, B60L 9/00, B60L 50/53, B60L 53/30, B60L 53/35, B60L 53/37

(54) **PROCÉDÉ DE POSITIONNEMENT LATÉRAL D'UN COLLECTEUR DU COURRANT PAR RAPPORT À UN CONDUCTEUR ALIMENTÉ EN ÉNERGIE ÉLECTRIQUE**

(71) Demandeur: ALSTOM Holdings, 93400 Saint-Ouen-sur-Seine (FR)
(72) Inventeur: DUPRAT, Patrick, 93340 LE RAINCY (FR)
(74) Mandataire: Plasseraud IP

(57) **Abrégé**

Procédé de positionnement latéral d'un collecteur et comprenant les étapes successives suivantes :
- localisation initiale (104) du véhicule (1),
- déplacement (110) du collecteur (30) depuis sa position escamotée vers une position intermédiaire,
- mesure (120) d'un champ magnétique par au moins un capteur de proximité (65) disposé au-dessus du segment conducteur de l'ensemble (12),
- détermination (140) de la position latérale du collecteur (30) par rapport au segment conducteur de l'ensemble (12) à partir du champ magnétique mesuré, et
- déplacement (150) du collecteur (30) par rapport au véhicule (1) de la position intermédiaire à la position de collecte à partir de la position latérale déterminée,
caractérisé en ce que, la position du véhicule (1) par rapport au segment conducteur de l'ensemble (12) est déterminée à partir d'informations de représentation du segment conducteur de l'ensemble (12) fournies par au moins un capteur distant (74, 76).

## Description

La présente invention concerne un procédé de positionnement latéral d'un collecteur par rapport à un segment conducteur d'un ensemble de segments conducteurs alimenté en énergie électrique.

Le document FR3129114 décrit un procédé et un dispositif de détermination d'une position latérale d'un collecteur par rapport à un ensemble de segments conducteurs alimenté en énergie électrique. L'ensemble de segments conducteurs est associé à une source de champ magnétique et le collecteur est propre à collecter de l'énergie électrique par contact avec un des segments conducteurs.

Le procédé mesure le champ magnétique, dans un premier temps, pour localiser l'ensemble de segments conducteurs à l'aide de deux capteurs magnétiques d'éloignement. Ensuite, le collecteur est déplacé vers une position intermédiaire.

Le procédé mesure le champ magnétique, dans un second temps, à l'aide de deux capteurs magnétiques de proximité et le collecteur est déplacé vers une position de collecte en positionnant le bras motorisé au-dessus du rail pour alimenter le véhicule.

Les étapes de localisation et de déplacement vers la position intermédiaire sont très lentes afin de s'assurer que le bras motorisé du véhicule soit placé au-dessus de l'ensemble de segments conducteurs. Ce temps qui est mis pour localiser l'ensemble de segments conducteurs correspond à une partie de l'itinéraire pendant laquelle le véhicule n'est pas chargé. Par exemple, lorsque le véhicule circule à une vitesse de 90 km/h par rapport au sol, une descente en 4 secondes engendre la non captation d'énergie électrique sur 100 m.

En outre, cette étape de localisation est imprécise. En effet, les deux capteurs magnétiques d'éloignement utilisés pour localiser l'ensemble de segments conducteurs se trouvent trop éloignés de ce dernier. Ce qui conduit souvent à un désaxement du véhicule par rapport à l'ensemble de segments conducteurs. Il peut donc arriver que les capteurs magnétiques de proximité ne détectent pas l'ensemble de segments conducteurs.

Le but de l'invention est alors de proposer un procédé de positionnement permettant une descente du collecteur plus précise et rapide.

A cet effet, l'invention a pour objet un procédé de positionnement selon la revendication 1.

Suivant d'autres aspects avantageux de l'invention, le procédé de positionnement comprend une ou plusieurs des caractéristiques des revendications 2 à 7.

L'invention concerne également un dispositif de positionnement latéral selon la revendication 8.

L'invention concerne également un véhicule selon la revendication 9.

Suivant d'autres aspects avantageux de l'invention, le véhicule comprend une ou plusieurs caractéristiques de la revendication 10.

L'invention apparaîtra plus clairement à la lecture de la description qui va suivre, donnée uniquement à titre d'exemple non limitatif, et faite en référence aux dessins dans lesquels :
[Fig. 1] la figure 1 est une vue schématique de côté d'un véhicule selon l'invention ;
[Fig. 2] la figure 2 est vue schématique en coupe selon la ligne II-II du véhicule de la figure 1 dans laquelle le collecteur est désaligné avec l'ensemble de segments conducteurs ;
[Fig. 3] la figure 3 est une vue selon la même coupe que la figure 2 du véhicule des figures 1 et 2 dans lesquelles le collecteur est aligné avec l'ensemble de segments conducteurs ; et
[Fig. 4] la figure 4 est un organigramme de procédé mis en oeuvre par un dispositif de positionnement latéral 60 intégré au véhicule de la figure 1.

Dans la suite de la description l'expression « sensiblement égal à » désigne une relation d'égalité à plus ou moins 10%, de préférence à plus ou moins 5 %.

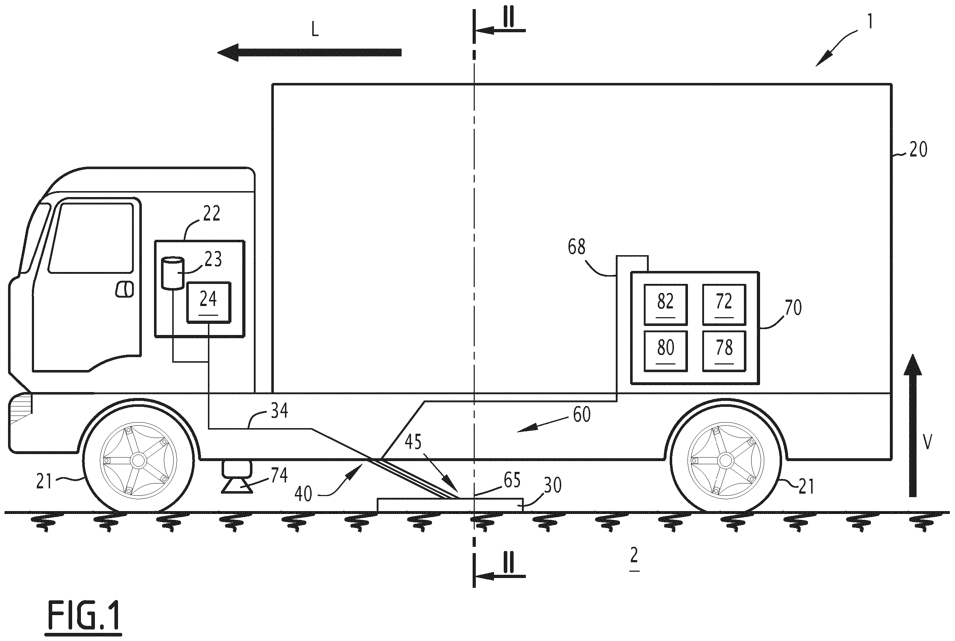

Comme représenté sur la figure 1, un véhicule 1 est propre à rouler sur une voie 2. Le véhicule 1 est un véhicule routier, par exemple un camion, un bus, ou une automobile.

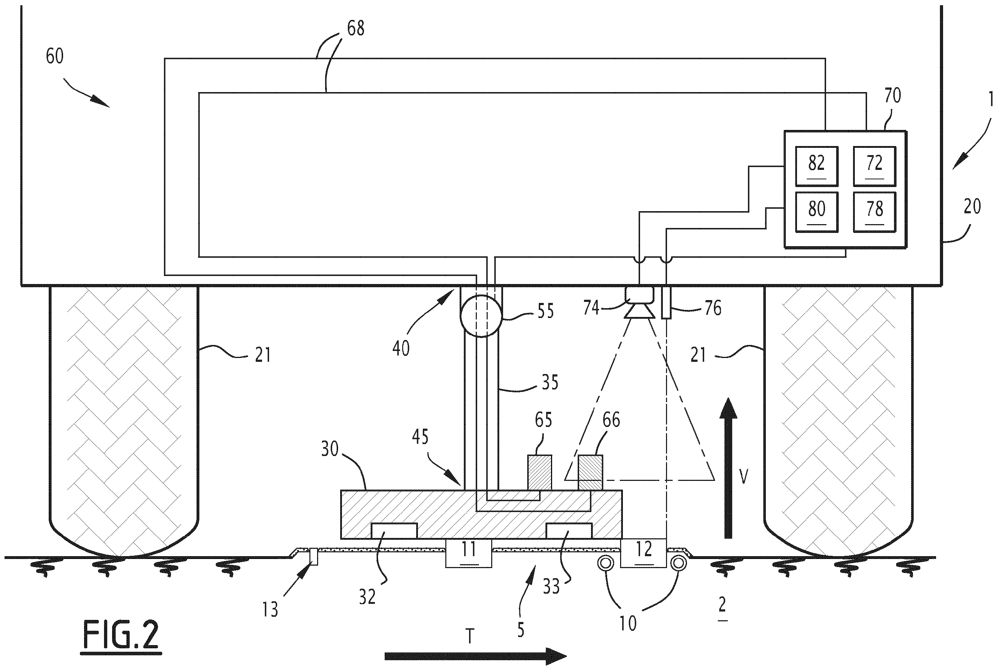

En référence à la figure 2, la voie 2 comprend une piste d'alimentation 5 associée à une source de champ magnétique 10. La piste d'alimentation 5 est par exemple, faite en caoutchouc et/ou en matériau isolant.

La piste d'alimentation 5 comporte plusieurs ensembles de segments conducteurs 11, 12, 13 parallèles s'étendant selon une direction longitudinale L et affleurant une surface de la voie 2.

Comme illustré sur la figure 2, la piste d'alimentation 5 comprend plus spécifiquement un ensemble de segments conducteurs positifs 11 et un ensemble de segments conducteurs négatifs 12 maintenus, par exemple, à des potentiels différents et constants. Plus spécifiquement l'ensemble de segments conducteurs négatifs 12 est maintenu à un potentiel proche de celui de la terre pour éviter une circulation de courant, depuis l'ensemble de segments conducteurs positifs 11, au-delà de l'ensemble de segments conducteurs négatifs 12 et tout danger en cas de contact avec un être humain ou un animal.

La piste d'alimentation 5 comprend un ensemble de segments conducteurs 13 servant de barrière de potentiel, relié à un potentiel voisin de celui de la terre pour éviter la circulation d'un courant depuis l'ensemble 11, au-delà de ladite barrière 13.

Chacun des ensembles de segments conducteurs 11, 12, 13 est formé de segments successifs. Chacun des segments conducteurs des ensembles 11, 12, 13 correspond, par exemple, à un rail. Chacun des ensembles de segments conducteurs positifs11 n'est alimenté qu'au passage du véhicule 1 comme décrit ci-après.

Géométriquement, l'ensemble 11 est intercalé entre l'ensemble 12 et la barrière de potentiel 13.

Chaque segment s'étend, par exemple, sur une distance d'environ 11 mètres. En outre, les ensembles de segments conducteurs positifs 11 et négatifs 12 présentent une largeur, définie dans une direction transversale T perpendiculaire à la direction longitudinale L, sensiblement égale à 5 centimètres. La direction longitudinale L correspond à la direction d'avancement du véhicule 1.

La direction transversale est également appelée direction latérale dans la suite de la description. La largeur de la barrière de potentielle 13 est, par exemple, sensiblement égale à 1 centimètre. Une distance entre chaque ensemble de segments conducteurs est, par exemple, sensiblement égale à 15 centimètres.

La source de champ magnétique 10 est, par exemple, formée de boucles, ou spires, entourant chaque segment conducteur négatif 12, alimentées par un courant alternatif. A cet effet, la voie est équipée d'un générateur de courant non représenté, propre à faire circuler dans chaque boucle 10 un courant alternatif dont une fréquence est nominalement égale à 38 KHz. Le courant alternatif est en outre modulé soit à 36 KHz soit à 40 KHz. Un tel courant alternatif induit donc un champ magnétique variable à la fréquence du courant. A titre d'exemple, une amplitude du courant circulant dans la source de champ magnétique 10 est inférieur à deux ampères. En outre, la modulation du courant, soit à 36kHz soit à 40kHz, induit des variations de fréquence détectables par le véhicule 1, via un capteur décrit ci-après. Ces variations servent de support pour y coder de l'information. Ainsi un pilotage de la modulation, alternativement entre 36kHz et 40kHz permet de coder des informations relatives à la voie 2, telles que : la présence de la piste d'alimentation 5, la présence d'un obstacle sur la voie 2, ou encore qu'un segment conducteur positif de l'ensemble 11 est le dernier segment alimenté.

En variante, la source de champ magnétique 10 est formée de bobines composées de plusieurs boucles entourant chaque segment négatif de l'ensemble 12.

Le véhicule 1 comprend, par exemple, une caisse 20 reposant sur des roues 21 et une motorisation 22 dans la caisse 20.

La motorisation 22 est, par exemple, au moins partiellement électrique. Elle comprend une source d'énergie autonome 23 pour une motorisation autonome ainsi qu'un moteur 24 d'entrainement des roues 21 du véhicule 1. La source d'énergie autonome 23 est une batterie, une pile à hydrogène ou un réservoir d'essence ou de diesel couplé à un moteur thermique entraînant un générateur pour produire de l'énergie électrique.

Le moteur 24 est propre à être alimenté en énergie électrique le cas échéant par la source d'énergie autonome 23 ou par un collecteur 30, porté par le véhicule 1, propre à collecter de l'énergie électrique par contact avec la piste d'alimentation 5.

Le collecteur 30 est propre à collecter de l'énergie électrique par contact avec l'un des segments conducteurs de l'ensemble 12. Le collecteur 30 est aussi déplaçable par rapport au véhicule 1 entre une position escamotée contre le véhicule 1 et une position de collecte dans laquelle le collecteur 30 est en contact avec d'une part l'un des segments conducteurs de l'ensemble 11 et d'autre part l'un des segments conducteurs de l'ensemble 12. De préférence, en position escamotée, le collecteur 30 est lié à la caisse 20, avantageusement par un dispositif de verrouillage, de manière à bloquer de manière sécurisé le collecteur 30 dans cette position.

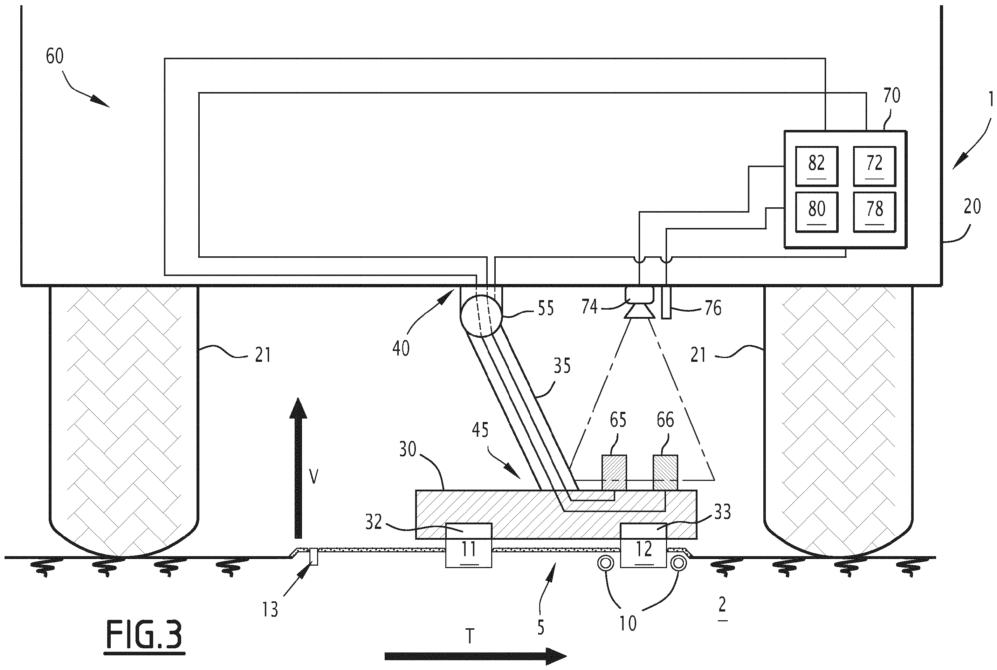

Le collecteur 30 comprend deux patins 32, 33 chacun propre à venir en contact avec l'un des segments conducteurs positifs de l'ensemble 11 et l'un des segments conducteurs négatifs de l'ensemble 12 pour fermer un circuit électrique. Plus spécifiquement, dans l'exemple de la figure 3, l'un des patins 32 est en contact avec l'un des segments conducteurs de l'ensemble 11 et l'autre patin 33 est en contact avec l'un des segments conducteurs de l'ensemble 12.

Une connectique 34 permet d'acheminer l'énergie électrique depuis le collecteur 30 jusqu'au moteur 24 et éventuellement vers la source d'énergie autonome 23 dans le cas d'une batterie.

Le collecteur 30 est relié au véhicule 1 par un dispositif d'actionnement apte à déplacer le collecteur 30 depuis sa position escamotée vers une position intermédiaire lorsque le véhicule 1 est dans une première position par rapport à l'ensemble 12. Avantageusement, cette première position correspond à une distance latérale selon la direction transversale T comprise entre 20 cm et 60 cm, de préférence 40 cm, par rapport à l'ensemble 12. Cette première position est déterminée de manière à éviter que le véhicule 1 soit désaxé de manière excessive par rapport à l'ensemble 12.

Le dispositif d'actionnement est en outre apte à déplacer le collecteur 30 depuis sa position intermédiaire vers la position de collecte à partir d'informations de position latérale déterminées au préalable et détaillées par la suite. Le dispositif d'actionnement est préférablement un bras motorisé 35.

Le bras motorisé 35 définit une extrémité proximale 40 reliée au véhicule 1 et une extrémité distale 45 sur laquelle est fixé le collecteur 30.

L'extrémité distale 45 est située entre la caisse 20 et la voie 2.

Le bras motorisé 35 comprend un actionneur 55 localisé à son extrémité proximale 40. L'actionneur 55 est propre à effectuer un déplacement angulaire du bras motorisé 35, au niveau de l'extrémité proximale 40, selon la direction transversale T et selon la direction verticale V perpendiculaire aux directions longitudinale L et transversale T.

Sous l'action de l'actionneur 55, le collecteur 30 est mobile par rapport au véhicule 1 selon la direction transversale T. En outre, sous l'action de l'actionneur 55, le collecteur 30 est également mobile verticalement par rapport au véhicule 1, entre la position escamotée contre le véhicule 1, dans laquelle il est, par exemple, en contact avec la caisse 20, et la position de collecte, dans laquelle il est en contact avec l'un des segments conducteurs positifs 12. En outre, le collecteur 30 est déplaçable dans la position intermédiaire entre la position escamotée et la position de collecte, comme décrit précédemment.

Lorsque le collecteur 30 est dans la position de collecte, il est propre à collecter de l'énergie électrique depuis la piste d'alimentation 5.

Sur les figures 1 et 3, le collecteur est en position de collecte. Sur la figure 2, le collecteur est en mouvement entre la position escamotée et la position de collecte.

Le véhicule 1 comprend en outre un dispositif 60 de positionnement latéral du collecteur 30 par rapport au segment conducteur de l'ensemble 12 dans lequel est intégré le bras motorisé 35.

Le dispositif 60 de positionnement latéral comprend deux capteurs de proximité 65, 66 disposés au droit de la voie 2 et fixés au collecteur 30. Une connectique 68 permet, par exemple, d'acheminer les données des deux capteurs de proximité 65, 66 depuis le collecteur 30 jusqu'à un module de traitement 70 compris dans le dispositif 60 de positionnement latéral.

La position des capteurs de proximité 65, 66 par rapport au collecteur 30 est connue. Chacun de ces capteurs 65, 66 est, par exemple, un capteur magnétique de proximité comportant une bobine, propre à mesurer l'amplitude du champ magnétique émis par la source 10. La distance de détection, selon la direction transversale T, de chaque capteur de proximité 65, 66 est, par exemple, sensiblement égale à 10mm. Ces capteurs de proximité 65, 66 sont verticalement disposés entre le patin 33, destiné à venir en contact avec l'un des segments conducteurs négatifs 12, et la caisse 20. Les capteurs de proximité 65, 66 sont transversalement positionnés de part et d'autre dudit patin 33.

Le dispositif 60 de positionnement latéral comprend également au moins un capteur distant, de préférence deux capteurs distants 74, 76. Avantageusement, les capteurs distants sont un capteur passif 74, par exemple une caméra 74 et un capteur actif 76. Avantageusement, le capteur actif est un dispositif d'émission-réception d'ondes électromagnétiques 76, avantageusement un capteur laser 76, de type détecteur à réflexion directe ou encore de type LIDAR par exemple. Les capteurs distants 74, 76 sont aptes à observer la voie 2 et à fournir des informations de représentation de la piste d'alimentation 5, de manière à repérer au moins une partie de la piste d'alimentation 5 et plus particulièrement un segment conducteur 12. Dans le cas d'un capteur passif 74, les informations de représentation sont, par exemple, des images de la piste d'alimentation 5. Dans le cas d'un capteur actif 76, les informations de représentation sont, par exemple, des nuages de points d'identification de la piste d'alimentation 5.La distance entre le capteur actif 76 et la piste d'alimentation 5 est obtenue par une moyenne des nuages de points d'identification de la piste d'alimentation 5.

Les capteurs distants 74, 76 sont fixés sous la caisse 20 du véhicule et sont tournés vers la voie 2. Les capteurs distants 74, 76 sont propres à fournir des informations de représentation de la voie 2 et donc de la piste d'alimentation 5, de manière à repérer au moins une partie de la piste d'alimentation 5 et plus particulièrement un segment conducteur 12.

Le module de traitement 70 comprend une unité de détermination 72 configurée pour déterminer la position latérale du véhicule 1 par rapport au segment conducteur de l'ensemble 12 à partir des informations de représentation fournies par les capteurs optiques distants 74, 76.

L'unité de détermination 72 est configurée également pour déterminer la position latérale du collecteur 30 par rapport au segment conducteur 12 à partir du champ magnétique mesuré.

Le module de traitement 70 est, par exemple, stocké dans la caisse 20.

Le module de traitement 70 comprend une unité de réception 78 configurée pour recevoir les signaux en provenance des capteurs distants 74, 76.

Le module de traitement 70 comprend en outre une unité de commande intermédiaire 80 configurée pour commander le déplacement du collecteur 30 de la position escamotée vers la position intermédiaire en pilotant l'actionneur 55 lorsque le véhicule 1 est correctement axé au-dessus de la piste d'alimentation 5.

Le module de traitement 70 comprend aussi une unité de commande de collecte 82 configurée pour commander le déplacement du collecteur 30 vers la position de collecte depuis la position intermédiaire à partir du champ magnétique mesuré.

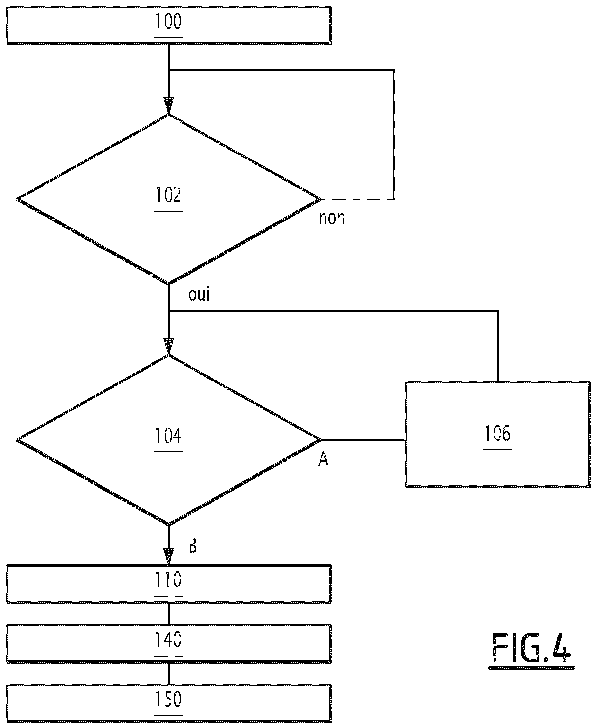

Le fonctionnement du véhicule 1, du dispositif 60 de positionnement latéral et plus particulièrement le pilotage des capteurs distants tels que la caméra 74 et le capteur laser 76 va être décrit en référence à la figure 4 représentant un organigramme d'un procédé mis en oeuvre par l'invention.

Initialement, le véhicule 1 roule sur la voie 2 à l'étape 100. Un système d'alimentation alimente les segments correspondant aux segments conducteurs positif 11 et négatif 12.

Le collecteur 30 est en position escamotée. La position escamotée correspond, par exemple, à une distance verticale comprise entre 25 et 30 cm entre le collecteur 30 et un segment conducteur de l'ensemble 12.

Lors d'une étape 102, le véhicule vérifie la réception d'un signal indiquant la présence d'une piste d'alimentation active comme connu en soi. Tant qu'un tel signal n'est pas reçu, l'étape 102 est mise en oeuvre.

Si un tel signal est reçu, la localisation initiale du véhicule par rapport à la piste d'alimentation est effectuée à l'étape 104. La voie 2 est alors observée par les capteurs distants 74, 76. Les informations de représentation sont analysées par le module de traitement 70 et la position du véhicule par rapport à la piste d'alimentation 5, notamment par rapport à l'ensemble 12, est alors déterminée en fonction des informations de représentation de la voie 2. A l'issue de l'étape 104 deux cas sont possibles :
A- le véhicule 1 n'est pas correctement axé au-dessus de la piste d'alimentation 5, correspondant par exemple à une distance latérale selon la direction transversale T supérieure à 60 cm entre le véhicule 1 et l'ensemble 12, notamment un segment conducteur de l'ensemble 12, ou
B- le véhicule 1 est correctement axé au-dessus de la piste d'alimentation 5.

Dans le cas A, le module de traitement 70 indique au conducteur la position du véhicule 1 par rapport à la piste d'alimentation 5 lors d'une étape 106 pour que le conducteur déplace le véhicule 1 en conséquence.

A cet effet, le module de traitement 70 transmet via une interface homme-machine (non représentée) la position du véhicule au conducteur et celle de la piste d'alimentation pour déplacer le véhicule 1 en conséquence.

Lorsque le véhicule 1 est correctement axé au-dessus de la piste d'alimentation 5, notamment par rapport à un segment conducteur de l'ensemble 12 (cas B), le dispositif d'actionnement 35 effectue une étape de déplacement 110 du collecteur 30 depuis sa position escamotée vers une position intermédiaire selon une première vitesse moyenne de déplacement. Cette première vitesse moyenne de déplacement par rapport au véhicule du collecteur 30 entre la position escamotée et la position intermédiaire est élevée et correspond à un premier temps moyen de déplacement avantageusement inférieur à 500 millisecondes, et préférablement sensiblement inférieur à un second temps de déplacement, avantageusement supérieur à 1 seconde, correspondant à une seconde vitesse moyenne de déplacement du collecteur 30 par rapport au véhicule 1 entre la position intermédiaire et la position de collecte comme décrit dans la suite, la seconde vitesse moyenne de déplacement étant sensiblement inférieure à la première vitesse moyenne de déplacement. La position intermédiaire correspond, par exemple, à une distance verticale de 10 cm entre le collecteur 30 et le segment conducteur négatif de l'ensemble 12.

L'étape de déplacement 110 du collecteur 30 de la position escamotée vers la position intermédiaire en pilotant l'actionneur 55 est effectuée par le module de traitement 70 et plus précisément par l'unité de commande intermédiaire 80.

Une fois le collecteur en position intermédiaire, lors d'une étape de détermination 140, l'unité de détermination 72 détermine la position latérale du collecteur 30 par rapport au segment conducteur négatif de l'ensemble 12 à partir du champ magnétique mesuré par les capteurs de proximité 65, 66. Avantageusement, la position latérale du collecteur 30 par rapport à un segment conducteur de l'ensemble 12 est déterminée à partir du champ magnétique filtré, par exemple au moyen d'un filtre passe-bande.

Lors d'une dernière étape de déplacement 150, le dispositif d'actionnement déplace le collecteur 30 depuis sa position intermédiaire vers la position de collecte à partir des informations de position latérale déterminées, à une seconde vitesse de déplacement plus réduite, correspondant à un second temps moyen de déplacement plus élevé, avantageusement compris entre 1s et 1,5s. Par un mécanisme d'asservissement utilisant les informations de position du collecteur, par rapport à un segment conducteur de l'ensemble 12, obtenues via les capteurs magnétiques de proximité, le collecteur est progressivement descendu.

La commande de déplacement 150 du collecteur 30 de la position intermédiaire vers la position de collecte en pilotant l'actionneur 55 est effectué par le module de traitement 70 et plus précisément par l'unité de commande de collecte 82.

Le procédé de positionnement latéral d'un collecteur 30 selon l'invention permet alors, non seulement de communiquer la position latérale du collecteur 30 par rapport au à un segment conducteur de l'ensemble 12, mais aussi de déplacer le collecteur 30 de la position escamotée à la position intermédiaire de manière plus rapide et précise grâce à l'utilisation des capteurs distants tels que la caméra 74 et le capteur laser 76. En variante, seul l'un des deux est mis en oeuvre.

Les capteurs distants aident à la détection de la piste d'alimentation 5 indépendamment de son matériau. En effet, le fait que la partie de la piste d'alimentation 5 détectée soit en caoutchouc ou en métal n'introduit qu'une étape préalable de calibration des capteurs distants. Les capteurs distants sont donc plus facilement adaptables au procédé.

L'utilisation de la caméra 74 est particulièrement avantageuse durant le jour dans de bonnes conditions de visibilité puisque les images provenant de la caméra 74 sont plus facilement exploitables par le module de traitement 70, que les ondes électromagnétiques détectées par le capteur laser 76.

L'utilisation du laser capteur 76 est particulièrement avantageuse dans de mauvaises conditions de visibilité, par exemple durant la nuit ou par temps de pluie, puisque les ondes électromagnétiques détectées sont plus facilement exploitables par le module de traitement 70.

## Revendications

1. Procédé de positionnement latéral d'un collecteur (30) par rapport à un segment conducteur d'un ensemble de segments conducteurs (12) alimenté en énergie électrique, chaque segment conducteur de l'ensemble (12) étant associé à une source de champ magnétique (10), le collecteur (30) étant porté par un véhicule (1) déplaçable par rapport au véhicule (1) entre une position escamotée contre le véhicule (1) et une position de collecte, dans laquelle le collecteur (30) est au contact du segment conducteur de l'ensemble (12), le collecteur (30) étant propre à collecter de l'énergie électrique par contact avec le segment conducteur de l'ensemble (12), le procédé comprenant les étapes successives suivantes :
- localisation initiale (104) du véhicule (1) par rapport au segment conducteur de l'ensemble (12),
- déplacement (110) du collecteur (30) depuis sa position escamotée vers une position intermédiaire lorsque le véhicule (1) est dans une première position par rapport au segment conducteur de l'ensemble (12) lors de la localisation initiale (104),
- mesure (120) d'un champ magnétique par au moins un capteur de proximité (65) disposé au-dessus du segment conducteur de l'ensemble (12) et dont une position par rapport au collecteur (30) est connue,
- détermination (140) de la position latérale du collecteur (30) par rapport au segment conducteur de l'ensemble (12) à partir du champ magnétique mesuré, et
- déplacement (150) du collecteur (30) par rapport au véhicule (1) de la position intermédiaire à la position de collecte à partir de la position latérale déterminée,
**caractérisé en ce que**, lors de l'étape de localisation initiale (104), la position du véhicule (1) par rapport au segment conducteur de l'ensemble (12) est déterminée à partir d'informations de représentation du segment conducteur de l'ensemble (12) fournies par au moins un capteur distant (74, 76).

2. Procédé selon la revendication 1, dans lequel, lors de l'étape de localisation initiale (104), la position du véhicule (1) par rapport au segment conducteur de l'ensemble (12) est déterminée via le capteur distant choisi dans le groupe consistant en un dispositif d'émission-réception d'ondes électromagnétiques (76) (76) et une caméra (74).

3. Procédé selon la revendication 2, dans lequel la première position correspond à une distance latérale selon la direction transversale T comprise entre 20 cm et 60 cm, de préférence 40 cm, par rapport à l'ensemble 12.

4. Procédé selon la revendication 2 ou 3, dans lequel, lors de l'étape de localisation initiale (104), la position du véhicule (1) par rapport au segment conducteur de l'ensemble (12) est déterminée via deux capteurs distants : un dispositif d'émission-réception d'ondes électromagnétiques (76) et une caméra (74).

5. Procédé selon l'une quelconque des revendications précédentes, dans lequel le procédé comprend en outre, entre l'étape de mesure (120) et l'étape de détermination (140), une étape de filtrage (130) du champ magnétique mesuré, et dans lequel lors de l'étape détermination (140), la position latérale du collecteur (30) par rapport au segment conducteur de l'ensemble (12) est déterminée à partir du champ magnétique filtré.

6. Procédé selon l'une quelconque des revendications précédentes, dans lequel l'étape de filtrage (130) est réalisée au moyen d'un filtre passe-bande.

7. Procédé selon l'une quelconque des revendications précédentes, **caractérisée en ce qu'**une première vitesse moyenne de déplacement par rapport au véhicule (1), du collecteur (30) entre la position escamotée et la position intermédiaire est supérieure à une seconde vitesse moyenne de déplacement du collecteur (30) par rapport au véhicule (1) entre la position intermédiaire et la position de collecte.

8. Dispositif (60) de positionnement latéral d'un collecteur (30) par rapport à un segment conducteur d'un ensemble de segments conducteurs (12) alimenté en énergie électrique déplaçable par rapport au véhicule entre une position escamotée contre le véhicule et une position de collecte, dans laquelle le collecteur (30) est au contact dun segment conducteur de l'ensemble (12), chaque segment conducteur de l'ensemble (12) étant associé à une source de champ magnétique (10), le collecteur (30) étant propre à collecter de l'énergie électrique par contact avec le segment conducteur de l'ensemble (12), le dispositif (60) de positionnement latéral comprenant :
- une unité (74, 76, 70) de localisation initiale du véhicule (1) par rapport au segment conducteur de l'ensemble (12),
- un dispositif d'actionnement (35) apte à déplacer le collecteur (30) par rapport au véhicule (1) depuis sa position escamotée vers une position intermédiaire lorsque le véhicule (1) est dans une première position par rapport au segment conducteur de l'ensemble (12),
- au moins un capteur de proximité (65) disposé au-dessus d'un segment conducteur de l'ensemble (12) et dont une position par rapport au collecteur (30) est connue,
- une unité (65, 66, 70) de détermination de la position latérale du collecteur (30) par rapport au segment conducteur de l'ensemble (12) à partir du champ magnétique mesuré,
- le dispositif d'actionnement (35) étant apte en outre à déplacer le collecteur (30) par rapport au véhicule (1) depuis sa position intermédiaire vers la position de collecte à partir de la position latérale déterminée,
**caractérisé en ce que**, l'unité de localisation initiale comporte au moins un capteur distant (74, 76) propres à fournir des informations de représentation du segment conducteur de l'ensemble (12) de manière à déterminer la position du véhicule (1) par rapport au segment conducteur de l'ensemble (12).

9. Véhicule routier (1) propre à rouler sur une voie (2) comprenant un rail (12) alimenté en énergie électrique auquel une source de champ magnétique (10) est associée, un collecteur (30) propre à collecter de l'énergie électrique par contact avec un segment conducteur de l'ensemble (12), et un dispositif (60) de positionnement latéral du collecteur (30) par rapport à un segment conducteur de l'ensemble (12) **caractérisé en ce que** le dispositif (60) de positionnement latéral est selon la revendication 8.

10. Véhicule (1) selon la revendication 9, dans lequel le dispositif d'actionnement est un bras motorisé (35) reliant le collecteur (30) au véhicule (1), le collecteur (30) étant mobile par rapport au véhicule (1) sous l'action du bras motorisé (35), selon une direction transversale (T) perpendiculaire à la direction d'avancement du véhicule (1).
